# EUROPÄISCHE PATENTSCHRIFT

(11) **EP 2 525 995 B1**
(45) Veröffentlichungstag und Bekanntmachung des Hinweises auf die Patenterteilung: **05.10.2016**
(21) Anmeldenummer: 11700799.7
(22) Anmeldetag: 13.01.2011
(51) Int. Cl.: B60N 2/68, F16B 21/20, B60N 2/225, B60N 2/235

(54) **BESCHLAGSYSTEM FÜR EINEN FAHRZEUGSITZ**
FITTING SYSTEM FOR A VEHICLE SEAT
SYSTÈME DE FERRURES POUR UN SIÈGE AUTOMOBILE

(30) Priorität: 20.01.2010 DE 102010005471
(43) Veröffentlichungstag der Anmeldung: 28.11.2012
(73) Patentinhaber: Johnson Controls Components GmbH & Co. KG, 67657 Kaiserslautern (DE)
(72) Erfinder: MAYER, Thomas, 42853 Remscheid (DE)
(86) Internationale Anmeldenummer: PCT/EP2011/000120
(87) Internationale Veröffentlichungsnummer: WO 2011/088969

(56) Entgegenhaltungen:
- EP-A2- 0 917 984
- DE-A1- 10 021 404
- US-A- 3 007 726

## Beschreibung

Die Erfindung betrifft ein Beschlagsystem für einen Fahrzeugsitz mit den Merkmalen des Oberbegriffs des Anspruches 1.

Ein Beschlagsystem dieser Art ist aus der DE 103 52 630 B4 bekannt. Bei einem der beiden Beschläge liegt die Welle mit einem Wulst an der Innenseite des Beschlags an, während an der Außenseite des Beschlags ein auf die Welle geschobener Schnellbefestiger anliegt. Die Welle ist dadurch relativ zum Beschlag unverschieblich.

Aus der DE 100 21 404 A1 ist eine an einer Welle eines Beschlags befestigte Sicherungsscheibe bekannt, die Federlaschen aufweist, welche in axialer Richtung von einem Basisbereich der Sicherungsscheibe abgekröpft sind und zur federnden Anlage an ein zweites Bauelement ausgebildet sind. Die Federlaschen dienen dem Ausgleich von radialem Spiel zwischen der Welle und dem zweiten Bauelement, nicht jedoch einer axialen Sicherung der Welle durch Formschluss.

Eine Kupplung zwischen zwei Wellen offenbart die EP 0 917 984 A2. Ein Wellenende der ersten Welle weist eine sechseckig ausgeformte Aufnahme auf, in die das als Sechskant-Kugelkopf ausgebildete Ende der zweiten Welle eingeführt ist. Der Kugelkopf ermöglicht eine Kippbewegung relativ zu der Aufnahme und somit einen Winkeltoleranzausgleich zwischen den beiden Wellen. Die Sechseck-Geometrien dienen der formschlüssigen Drehmomentübertragung.

Der Erfindung liegt die Aufgabe zu Grunde, ein Beschlagsystem der eingangs genannten Art zu verbessern, insbesondere spezielle Umformungen der Welle zu vermeiden. Diese Aufgabe wird erfindungsgemäß durch ein Beschlagsystem mit den Merkmalen des Anspruches 1 gelöst. Vorteilhafte Ausgestaltungen sind Gegenstand der Unteransprüche.

Der Schnellbefestiger einerseits und der Mitnehmer und/oder dessen Sicherungselement andererseits sind separate Bauteile (separat ausgebildete Bauteile). Sie können daher aus verschiedenen Materialien bestehen, beispielsweise Federstahl einerseits und Kunststoff andererseits, so dass die jeweils günstigsten Eigenschaften der verschiedenen Materialien kombiniert werden.

Indem der Schnellbefestiger mit dem Mitnehmer und/oder dessen Sicherungselement verbunden ist, wird eine axiale Sicherung der Welle in beide axiale Richtungen erreicht, ohne dass spezielle Umformungen der Welle notwendig sind. In eine Richtung wirkt der Schnellbefestiger aufgrund der Anlage an den Beschlag als axiale Sicherung der Welle, in der entgegengesetzten Richtung aufgrund der Verbindung mit dem Mitnehmer oder dessen Sicherungselement. Der Schnellbefestiger sichert also das Zusammenwirken von Welle und Mitnehmer axial in beide Richtungen. Mit welchem der beiden Bauteile der Schnellbefestiger direkt verbunden ist, hängt von der Orientierung des Mitnehmers oder des Beschlags ab. Indirekt ist der Schnellbefestiger bei beiden Orientierungen mit dem Mitnehmer verbunden.

Da die Welle und der Mitnehmer in Umfangsrichtung drehfest verbunden sind oder mit einem Leerweg auf Mitnahme gekoppelt sind, kann die Verbindung zwischen dem Schnellbefestiger und dem Mitnehmer oder dessen Sicherungselement einfach gestaltet werden. Dies wird erreicht, durch mindestens einen axial abstehenden Finger zum formschlüssigen Zusammenwirken, vorzugsweise mittels Haken, insbesondere Nasen zum Clipsen.

Die Erfindung kann sowohl mit Getriebebeschlägen als auch mit Rastbeschlägen verwendet werden. Sie kann als Lehneneinsteller eines Fahrzeugsitzes oder an anderer Stelle des Fahrzeugsitzes verwendet werden. Der Schnellbefestiger kann auch mit einer anderen Baugruppe als einem Beschlag zusammenwirken.

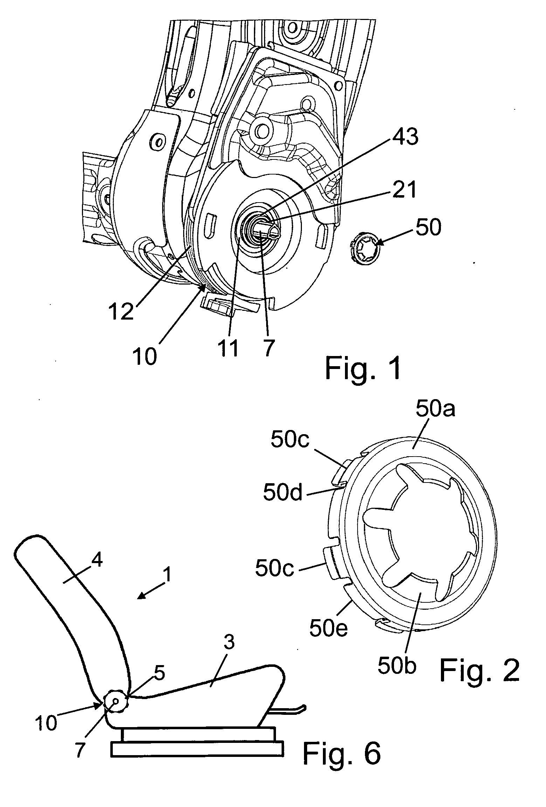

Im Folgenden ist die Erfindung anhand eines in der Zeichnung dargestellten Ausführungsbeispiels näher erläutert. Es zeigen
- Fig. 1: eine perspektivische Ansicht des Ausführungsbeispiels vor der Montage des Schnellbefestigers,
- Fig. 2: eine perspektivische Ansicht des Schnellbefestigers,

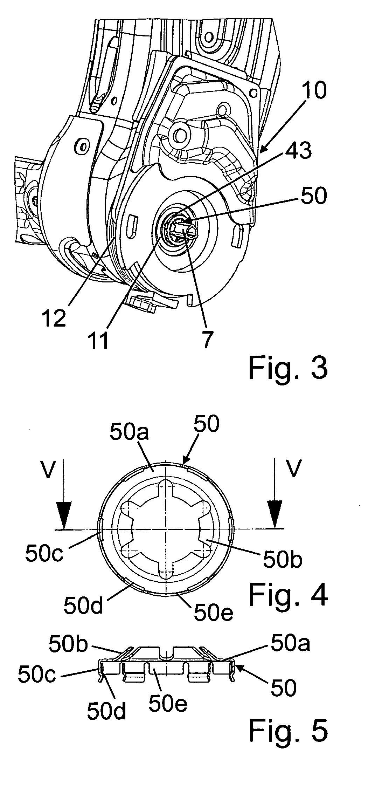

- Fig. 3: eine perspektivische Ansicht des Ausführungsbeispiels nach der Montage des Schnellbefestigers,
- Fig. 4: eine Draufsicht auf den Schnellbefestiger,
- Fig. 5: einen Schnitt durch den Schnellbefestiger entlang der Linie V-V in Fig. 4, und
- Fig. 6: eine schematische Darstellung eines Fahrzeugsitzes.

Ein Fahrzeugsitz 1 für ein Kraftfahrzeug weist ein Sitzteil 3 und eine relativ zum Sitzteil 3 in ihrer Neigung einstellbare Lehne 4 auf. Zur Neigungseinstellung der Lehne 4 wird manuell, beispielsweise mittels eines Handrades 5, oder motorisch, beispielsweise mittels eines Elektromotors, eine Welle 7 gedreht, welche horizontal im Übergangsbereich zwischen Sitzteil 3 und Lehne 4 angeordnet ist. Auf beiden Seiten des Fahrzeugsitzes 1 greift die Welle 7 drehfest in einen Beschlag 10 ein. Die Welle 7 definiert die verwendeten Richtungsangaben eines Zylinderkoordinatensystems. Die Welle 7 und die beiden Beschläge 10 sind Bestandteile eines Beschlagsystems zur Neigungseinstellung der Lehne 4.

Jeder Beschlag 10 weist ein erstes Beschlagteil 11 und ein zweites Beschlagteil 12 auf, welche relativ zueinander verdrehbar sind. Mit der Montage des Beschlags 10 ist eines der beiden Beschlagteile 11 und 12 der Lehne 4 zugeordnet und mit deren Struktur verbunden, während das andere der beiden Beschlagteile 11 und 12 dem Sitzteil 3 zugeordnet und fest mit dessen Struktur verbunden ist. Das relative Verdrehen der beiden Beschlagteile 11 und 12 bewirkt die Neigungseinstellung der Lehne 4.

Im Zentrum des Beschlags 10 ist drehbar ein Mitnehmer 21 gelagert. Der Mitnehmer 21 ist zentral mit einer Bohrung zur Aufnahme der Welle 7 versehen. Das Profil der Bohrung ist passend zum Profil der Welle 7, vorliegend einem Keilwellenprofil, ausgebildet. Die Welle 7 und der Mitnehmer sind vorzugsweise drehfest miteinander gekoppelt. Es kann jedoch auch in Umfangsrichtung ein Leerweg vorgesehen sein, so dass die Welle 7 und der Mitnehmer 21 auf Mitnahme gekoppelt sind. Der Mitnehmer 21 weist vorzugsweise auf einer Seite eine Abdeckscheibe oder einen Flansch auf, mittels dessen er auf der Außenseite des einen der beiden Beschlagteile 11 und 12 anliegt. Auf der Außenseite des anderen der beiden Beschlagteile 11 und 12 durch ein - beispieslweise ringförmiges, vorzugsweise aufgeclipstes - Sicherungselement 43 axial gesichert. Hinsichtlich des weiteren inneren Aufbaus des Beschlags 10 sind zwei Grundtypen denkbar.

Gemäß einem ersten Grundtyp ist der Beschlag 10 als Getriebebeschlag ausgebildet, bei welchem das erste Beschlagteil 11 und das zweite Beschlagteil 12 mittels eines Getriebes zum Verstellen und Feststellen miteinander verbunden sind, genauer gesagt mittels eines - vorliegend selbsthemmenden - Exzenterumlaufgetriebes, wie es beispielsweise in der DE 44 36 101 A1 beschrieben ist. Zur Ausbildung des Getriebes ist am zweiten Beschlagteil 12 ein außenverzahntes Zahnrad und am ersten Beschlagteil 11 ein innenverzahnter Zahnkranz ausgebildet, welche miteinander kämmen. Der Durchmesser des Kopfkreises der Außenverzahnung des Zahnrads ist um wenigstens eine Zahnhöhe kleiner als der Durchmesser des Fußkreises der Innenverzahnung des Zahnkranzes. Ein entsprechender Unterschied der Zähneanzahl von Zahnrad und Zahnkranz von wenigstens einem Zahn ermöglicht eine Abwälzbewegung des Zahnkranzes am Zahnrad. Eines der beiden Beschlagteile 11 und 12 weist einen Kragen auf, der vorzugsweise als Lager für den Mitnehmer 21 dient. Auf dem Kragen sind zwei Keilsegmente (mit ihren gekrümmten Innenflächen) abgestützt, die (mit ihren gekrümmten Außenflächen und vorzugsweise mittels einer Gleitlagerbuchse) das andere der beiden Beschlagteile 11 und 12 lagern. Der Mitnehmer 21 weist ein mit Spiel zwischen die Schmalseiten der Keilsegmente fassendes Mitnehmersegment auf. Die einander zugekehrten Breitseiten der Keilsegmente nehmen jeweils einen Endfinger einer Feder auf, welche die Keilsegmente in Umfangsrichtung auseinanderdrückt.

Durch die Keilsegmente 27 (und die Feder) wird ein Exzenter definiert, welcher in Verlängerung der Richtung der Exzentrizität das Zahnrad an einer Eingriffsstelle in den Zahnkranz drückt. Bei einem Antrieb durch die sich (mehrfach) drehende Welle 7 wird ein Drehmoment zunächst auf den Mitnehmer 21 und mittels des Mitnehmersegments dann auf den so definierten Exzenter übertragen, welcher entlang der Gleitlagerbuchse gleitet unter Verlagerung der Richtung der Exzentrizität und damit unter Verlagerung der Eingriffsstelle des Zahnrades im Zahnkranz, was sich als taumelnde Abwälzbewegung darstellt, d.h. als Relativdrehung mit überlagerter Taumelbewegung. Die Neigung der Lehne 4 ist durch diesen Antrieb der Beschläge 10 zwischen mehreren Gebrauchsstellungen stufenlos einstellbar.

Optional ist ein drittes Beschlagteil vorgesehen, welches einerseits fest mit der Struktur der Lehne 4 verbunden und andererseits relativ zu dem der nicht dem Sitzteil 3 zugeordneten Beschlagteil 11 oder 12 schwenkbar gelagert und mit diesem lösbar verriegelt ist. Diese Ausbildung erlaubt ein Freischwenken der Lehne 4 zur Erleichterung des Zugangs zu einer hinteren Sitzreihe, ohne dass die eingestellte Neigung der Lehne 4 geändert wird.

Gemäß einem zweiten Grundtyp ist der Beschlag 10 als Rastbeschlag ausgebildet, bei welchem das erste Beschlagteil 11 und das zweite Beschlagteil 12 miteinander verriegelbar sind, wie es beispielsweise in der DE 10 2006 015 560 B3 beschrieben ist.

Das zweite Beschlagteil 12 weist Führungssegmente auf, welche mit geraden Führungsflächen paarweise jeweils einen Riegel seitlich in radialer Richtung führen. Die Riegel sind an ihrem radial außen liegenden Ende mit einer Verzahnung versehen, die mit einem Zahnkranz des als Hohlrad ausgebildeten ersten Beschlagteils 11 in Eingriff gelangen (einfallen) kann. Wenn der Zahnkranz und die Riegel zusammenwirken, ist der Beschlag 10 verriegelt. Die Führungssegmente liegen mit jeweils einer gebogenen Lagerfläche am Zahnkranz des ersten Beschlagteils 11 an, wodurch die beiden Beschlagteile 11 und 12 einander lagern. Auf dem Mitnehmer 21 sitzt drehfest oder wenigstens auf Mitnahme gekoppelt ein Exzenter, welcher in dem zwischen den Beschlagteilen 11 und 12 definierten Bauraum angeordnet ist. Eine Federanordnung beaufschlagt den Exzenter, welcher auf die radial beweglichen Riegel einwirkt und diese beaufschlagt, so dass sie radial nach außen gedrückt werden, um in den Zahnkranz einzufallen. Eine Steuerscheibe, die vorzugsweise drehfest auf dem Exzenter oder auf dem Mitnehmer 21 sitzt, wirkt mit den Riegeln zusammen, um bei einer Drehung (um wenige Grad) des Mitnehmers 21 - und des damit angetriebenen Exzenters und der Steuerscheibe - entgegen der Kraft der Federanordnung die Riegel zurückzuholen, d.h. aus dem Zahnkranz radial nach innen zu ziehen, womit der Beschlag 10 entriegelt ist und die beiden Beschlagteile 11 und 12 relativ zueinander verdrehbar sind. Die Neigung der Lehne 4 ist dadurch zwischen mehreren, zum Sitzgebrauch geeigneten Gebrauchsstellungen einstellbar.

Beiden Grundtypen gemeinsam ist, dass auf die Welle 7 von deren äußeren Ende her ein Schnellbefestiger 50 bis zum Beschlag 10 geschoben ist, und zwar vorzugsweise bei beiden Beschlägen 10. Der Schnellbefestiger 50, welcher einen weiteren Bestandteil des Beschlagsystems bildet, sitzt nach der Montage axial unverschieblich auf der Welle 7. Hierzu stehen von dem ringförmigen, die Welle 7 wenigstens teilweise umschließenden Grundkörper 50a des Schnellbefestigers 50 mehrere (vorliegend sechs) in Umfangsrichtung verteilte Zungen 50b radial nach innen (und axial in die vom Beschlag 10 abgewandte Richtung) ab. Die Zungen 50b des beispielsweise aus Federstahl bestehenden Schnellbefestigers 50 liegen unter Vorspannung an der Welle 7 anliegen. Durch diesen Reibschluss ist das Verschieben des Schnellbefestigers 50 relativ zur Welle 7 in die vom Beschlag 10 abgewandte Richtung praktisch, d.h. mit den im Gebrauch auftretenden Kräften und ohne Werkzeuge, unmöglich und in die entgegengesetzte (dem Beschlag 10 zugewandte) Richtung, in welche der Schnellbefestiger 50 aufgeschoben wurde, sehr erschwert und durch eine Anlage am Beschlag 10 ebenfalls unmöglich. Zudem besteht in Umfangsrichtung eine Formschluss zwischen den Zungen 50b und dem Keilwellenprofil der Welle 7.

Um auch ein Verschieben der Welle 7 relativ zum Beschlag 10 - und damit zum Mitnehmer 21 - zu verhindern, was mittels der Anlage des Schnellbefestigers 50 am Beschlag nur in eine von zwei möglichen Richtungen sichergestellt ist, ist der Schnellbefestiger 50 erfindungsgemäß mit dem Mitnehmer 21 oder dessen Sicherungselement 43 verbunden, je nachdem welche Seite des Beschlags 10 zum äußeren Ende der Welle 7 weist. Damit sichert der Schnellbefestiger 50 das Zusammenwirken von Welle 7 und Mitnehmer 21 axial in beide Richtungen. Für die besagte Verbindung weist der Schnellbefestiger 50 wenigstens einen, vorzugsweise mehrere (vorliegend sechs) Finger 50c auf, welche in Umfangsrichtung verteilt vom Grundkörper 50a axial abstehen und zum Beschlag 10 hin weisen. Die Finger 50c wirken formschlüssig mit dem Mitnehmer 21 oder Sicherungselement 43 zusammen. Sie können beispielsweise als Haken oder dergleichen ausgebildet sein, welche den Mitnehmer 21 oder das Sicherungselement 43 hintergreifen, beispielsweise mit einer radial nach innen weisenden Nase 50d in eine umlaufende Rille desselben greifen. Zwischen den Fingern 50c sind vorzugsweise jeweils abwechselnd weitere (vorliegende sechs) axial abstehende Segmente 50e vorgesehen, welche die Positionierung des Schnellbefestigers 50 relativ zum Mitnehmer 21 erleichtern können.

### Bezugszeichenliste

- 1: Fahrzeugsitz
- 3: Sitzteil
- 4: Lehne
- 5: Handrad
- 7: Welle
- 10: Beschlag
- 11: erstes Beschlagteil
- 12: zweites Beschlagteil
- 21: Mitnehmer
- 43: Sicherungselement
- 50: Schnellbefestiger
- 50a: Grundkörper
- 50b: Zunge
- 50c: Finger
- 50d: Nase
- 50e: Segment

## Patentansprüche

1. Beschlagsystem für einen Fahrzeugsitz, insbesondere für einen Kraftfahrzeugsitz, mit
a) einer sich axial erstreckenden Welle (7), welche in Umfangsrichtung drehbar ist,
b) wenigstens einem Beschlag (10), der einen drehbar gelagerten und mittels eines Sicherungselements (43) axial gesicherten Mitnehmer (21) zum Antreiben oder zum Entriegeln des Beschlags (10) aufweist, wobei die Welle (7) mit dem Mitnehmer (21) in Umfangsrichtung drehfest oder auf Mitnahme gekoppelt zusammenwirkt, um den Mitnehmer (21) zu drehen, und
c) wenigstens einem Schnellbefestiger (50), welcher axial unverschieblich auf der Welle (7) sitzt, um das Zusammenwirken von Welle (7) und Mitnehmer (21) axial in wenigstens eine Richtung zu sichern, wobei
d) der Schnellbefestiger (50) mit dem Mitnehmer (21) und/oder dessen Sicherungselement (43) verbunden ist,
**dadurch gekennzeichnet, dass**
e) der Schnellbefestiger (50) einen Grundkörper (50a), der insbesondere ringförmig ausgebildet ist und die Welle (7) wenigstens teilweise umschließt, und wenigstens einen vom Grundkörper (50a) axial abstehenden Finger (50c) aufweist, welcher zum Beschlag (10) hin weist und
f) der wenigstens eine oder die vorgesehenen Finger (50c) formschlüssig mit dem Mitnehmer (21) oder dem Sicherungselement (43) zusammenwirken.

2. Beschlagsystem nach Anspruch 1, **dadurch gekennzeichnet, dass** der wenigstens eine oder die vorgesehenen Finger (50c) als Haken ausgebildet sind, welche den Mitnehmer (21) oder das Sicherungselement (43) hintergreifen.

3. Beschlagsystem nach Anspruch 1 oder 2, **dadurch gekennzeichnet, dass** der wenigstens eine oder die vorgesehenen Finger (50c) eine radial nach innen weisende Nase (50d) aufweisen.

4. Beschlagsystem nach einem der Ansprüche 1 bis 3, **dadurch gekennzeichnet, dass** der Schnellbefestiger (50) vom Grundkörper (50a) axial abstehende Segmente (50e) zwischen den Fingern (50c) aufweist.

5. Beschlagsystem nach einem der Ansprüche 1 bis 4, **dadurch gekennzeichnet, dass** der Schnellbefestiger (50) vom Grundkörper (50a) radial nach innen abstehende Zungen (50b) aufweist, welche an der Welle (7), insbesondere mit Vorspannung, anliegen.

6. Beschlagsystem nach einem der vorhergehenden Ansprüche, **dadurch gekennzeichnet, dass** der Beschlag (10) relativ zueinander verdrehbare Beschlagteile (11, 12) aufweist, wobei die Beschlagteile (11, 12) miteinander in Getriebeverbindung stehen mittels eines Zahnkranzes und eines damit kämmenden Zahnrades, welche durch einen vom Mitnehmer (21) angetriebenen, umlaufenden Exzenter (27) eine relative Abwälzbewegung ausführen, oder wobei die Beschlagteile (11, 12) miteinander verriegelbar sind mittels radial verschieblicher Riegel, welche von dem einen Beschlagteil (11, 12) geführt von einem federbelasteten, drehbar gelagerter Exzenter zum Zusammenwirken mit einem Zahnkranz des anderen Beschlagteils (11, 12) beaufschlagbar und mittels Drehung des Mitnehmers (21) rückholbar sind.

7. Fahrzeugsitz, insbesondere Kraftfahrzeugsitz, mit einem Beschlagsystem nach einem der vorhergehenden Ansprüche.

## Claims

1. Fitting system for a vehicle seat, in particular for a motor vehicle seat, comprising
a) an axially extending shaft (7) which is rotatable in the circumferential direction,
b) at least one fitting (10) which has a rotatably mounted driver (21), which is secured axially by means of a securing element (43), for driving or releasing the fitting (10), wherein the shaft (7) interacts with the driver (21) for conjoint rotation in the circumferential direction or in a manner coupled thereto for carrying the latter along, in order to rotate the driver (21), and
c) at least one rapid fastener (50) which sits on the shaft (7) in an axially nondisplaceable manner in order to secure the interaction of shaft (7) and driver (21) axially in at least one direction, wherein
d) the rapid fastener (50) is connected to the driver (21) and/or to the securing element (43) thereof,
**characterized in that**
e) the rapid fastener (50) at least partially surrounds a basic body (50a), which is in particular of annular design, and the shaft (7) and has at least one finger (50c) which protrudes axially from the basic body (50a) and points towards the fitting (10), and
f) the at least one finger or the provided fingers (50c) interact with the driver (21) of the securing element (43) in a form-fitting manner.

2. Fitting system according to Claim 1, **characterized in that** the at least one finger or the provided fingers (50c) are designed as hooks which engage behind the driver (21) or the securing element (43).

3. Fitting system according to Claim 1 or 2, **characterized in that** the at least one finger or the provided fingers (50c) have a radially inwardly pointing lug (50d).

4. Fitting system according to one of Claims 1 to 3, **characterized in that** the rapid fastener (50) has segments (50e), which protrude axially from the basic body (50a), between the fingers (50c).

5. Fitting system according to one of Claims 1 to 4, **characterized in that** the rapid fastener (50) has tongues (50b) which protrude radially inwards from the basic body (50a) and lie against the shaft (7), in particular with prestress.

6. Fitting system according to one of the preceding claims, **characterized in that** the fitting (10) has fitting parts (11, 12) which are rotatable relative to each other, wherein the fitting parts (11, 12) are in geared connection with each other by means of a toothed ring and a toothed wheel meshing therewith, which, by means of a revolving eccentric (27) driven by the driver (21), execute a relative rolling movement, or wherein the fitting parts (11, 12) are lockable to each other by means of radially displaceable latches which, guided by the one fitting part (11, 12), can be acted upon by a spring-loaded, rotatably mounted eccentric for interaction with a toothed ring of the other fitting part (11, 12) and are retrieveable by means of rotation of the driver (21).

7. Vehicle seat, in particular motor vehicle seat, comprising a fitting system according to one of the preceding claims.

## Revendications

1. Système de ferrures pour un siège de véhicule, notamment pour un siège de véhicule automobile, avec
a) un premier arbre (7) s'étendant en direction axiale, lequel est rotatif dans une direction périphérique,
b) au moins une ferrure (10) qui comporte un entraîneur (21) bloqué en direction axiale à l'aide d'un élément de blocage (43), pour entraîner ou pour déverrouiller la ferrure (10), l'arbre (7) coopérant dans la direction périphérique avec l'entraîneur (21) en étant solidaire en rotation ou en étant couplé en entraînement pour faire tourner l'entraîneur (21) et
c) au moins une fixation rapide (50), laquelle repose sur l'arbre (7) en étant indéplaçable en direction axiale, pour bloquer axialement, dans au moins une direction, la coopération entre l'arbre (7) et l'entraîneur (21),
d) la fixation rapide (50) étant reliée avec l'entraîneur (21) et/ou l'élément de blocage (43) de celui-ci
**caractérisé en ce que**
e) la fixation rapide (50) entoure au moins en partie un corps de base (50a) qui est conçu notamment de forme annulaire et l'arbre (7) et comporte au moins un doigt (50c) saillant en direction axiale à partir du corps de base (50a), lequel est dirigé vers la ferrure (10) et
f) **en ce que** l'au moins un ou les doigt(s) (50c) prévu(s) coopèrent par complémentarité de forme avec l'entraîneur (21) ou avec l'élément de blocage (43).

2. Système de ferrures selon la revendication 1, **caractérisé en ce que** l'au moins un ou les doigt(s) (50c) prévu(s) sont conçus en forme de crochets, lesquels s'accrochent par l'arrière sur l'entraîneur (21) ou sur l'élément de blocage (43).

3. Système de ferrures selon la revendication 1 ou la revendication 2, **caractérisé en ce que** l'au moins un ou les doigt (s) (50c) prévu(s) comportent un tenon (50d) dirigé vers l'intérieur en direction radiale.

4. Système de ferrures selon l'une quelconque des revendications 1 à 3, **caractérisé en ce qu'**entre les doigts (50c), la fixation rapide (50) comporte des segments (50e) saillant en direction axiale à partir du corps de base (50a).

5. Système de ferrures selon l'une quelconque des revendications 1 à 4, **caractérisé en ce que** la fixation rapide (50) comporte des languettes (50b) saillant vers l'intérieur en direction axiale à partir du corps de base (50a), lesquelles s'appuient sur l'arbre (7), notamment avec une précontrainte.

6. Système de ferrures selon l'une quelconque des revendications précédentes, **caractérisé en ce que** la ferrure (10) comporte des éléments de ferrure (11, 12) rotatifs les uns par rapport aux autres, les éléments de ferrure (11, 12) étant en liaison mutuelle par transmission à l'aide d'une couronne dentée et une roue dentée s'engrenant dans celle-ci, lesquelles par un excentrique (27) périphérique, entraîné par l'entraîneur (21) réalisent un déplacement relatif en déroulement ou les éléments de ferrure (11, 12) étant mutuellement verrouillables à l'aide de verrous déplaçables en direction radiale, qui sont susceptibles d'être guidés par l'un des éléments de ferrure (11, 12), d'être contraints par un excentrique logé en rotation, soumis à un ressort pour la coopération avec une couronne dentée de l'autre élément de ferrure (11, 12) et d'être rappelés par rotation de l'entraîneur (21).

7. Siège de véhicule, notamment siège de véhicule automobile, avec un système de ferrures selon l'une quelconque des revendications précédentes.
